# EUROPÄISCHE PATENTSCHRIFT

(11) **EP 0 992 631 B1**
(45) Veröffentlichungstag und Bekanntmachung des Hinweises auf die Patenterteilung: **06.11.2002**
(21) Anmeldenummer: 99117358.4
(22) Anmeldetag: 03.09.1999
(51) Int. Cl.: E03B 9/10, F16K 31/46, F16L 55/115

(54) **Einbaugarnitur für insbesondere unterirdisch verlegte Gas- und/oder Wasserarmaturen**
Installation fitting particularly for underground gas- and/or water mountings
Garnitur d'installation en particulier pour robinets enterrés de gaz et/ou d'eau

(30) Priorität: 09.10.1998 DE 29818024 U
(43) Veröffentlichungstag der Anmeldung: 12.04.2000
(73) Patentinhaber: Kunststoff-Spritzerei Göbelsmann GmbH Gas- und Wasserwerksbedarf, 45549 Sprockhövel (DE)
(72) Erfinder: Göbelsmann, Dirk-Ewald, 45549 Sprockhövel (DE)
(74) Vertreter: Nunnenkamp, Jörg, Dr.

(56) Entgegenhaltungen:
- DE-A- 4 438 205
- DE-C- 19 703 379
- FR-A- 1 340 267

## Beschreibung

Die Erfindung betrifft eine Einbaugarnitur für insbesondere unterirdisch verlegte Gas- und/oder Wasserarmaturen, mit einer in einem Schutzrohr zur Erdoberfläche geführten Betätigungsstange, die armaturseitig an die Gas- und/oder Wasserarmatur anschließbar ist, und mit einer erdoberflächenseitigen Abdeckung für das Schutzrohr und die hierdurch geführte Betätigungsstange, wobei die Abdeckung einen Schutzrohrflansch sowie einen hierin drehbar gelagerten Axiallagereinsatz zur Aufnahme der Betätigungsstange aufweist.

Derartige Einbaugarnituren dienen üblicherweise dazu, Schieber, Ventile od. dgl. in unterirdisch verlegten Gas- und/oder Wasserarmaturen zu betätigen. Zu diesem Zweck wird die armaturseitig an die Gas- und/oder Wasserarmatur angeschlossene Betätigungsstange mittels eines Bedienschlüssels verstellt, regelmäßig verdreht. Hierzu weist der Bedienschlüssel im Allgemeinen eine unterseitige Mehrkantaufnahme für einen korrespondierend geformten Zapfen kopfseitig der Betätigungsstange auf. Bei Nichtgebrauch und entferntem Bedienschlüssel wird das Schutzrohr mit zugehöriger Abdeckung zumeist von einer Gussplatte (üblicherweise Straßenkappe genannt) an der Erdoberfläche abgedeckt.

Da die vorgenannten Einbaugarnituren nur sporadisch benutzt werden, können Probleme dergestalt auftreten, dass Wasser, Schmutz usw. randseitig der Gussplatte, d. h. durch den Spalt zwischen Gussplatte bzw. Straßenkappe und Umrahmung gelangt. Dies lässt sich auf eine an dieser Stelle zumeist fehlende Dichtung zurückführen. Nach dem Eindringen passiert das vorgenannte Medium die erdoberflächenseitige Abdeckung für das Schutzrohr und gelangt schließlich in das Schutzrohr selber. Dieses wirkt gleichsam als Speicher für solche Medien, was schlimmstenfalls dazu führt, dass die Betätigungsstange und damit der Schieber, das Ventil usw. im Schutzrohr nicht mehr gedreht werden kann.

Zwar hat man dieses Problem grundsätzlich in der DE 44 38 205 A1 erkannt und lehrt hierzu, den Axiallagereinsatz bzw. eine dortige Gleitscheibe mit einer Dichtlippe auszurüsten. Diese Dichtlippe ragt über den zugehörigen Schutzrohrflansch bzw. eine bekannte Randkappe hinaus. Hierdurch hat man eine geneigt angeordnete horizontale Trennebene definiert, so dass Wasser von außen nicht in den Innenbereich der vorbeschriebenen Einbaugarnitur eindringen können soll.

Abgesehen davon, dass hierzu speziell aneinander angepasste Bauteile erforderlich sind, ist nach wie vor ein Spalt zwischen Schutzrohrflansch und Axiallagereinsatz vorhanden, der temperatur- und/oder alterungsbedingt unterschiedliche Größen annehmen kann. Hieraus wiederum resultiert die Gefahr, dass verschleißfördernde Verschmutzungen und/oder Wasser dennoch eindringen können. - Vergleichbares gilt für die gattungsbildende DE 197 03 379 C1 welche die vorerwähnte Problematik erst gar nicht erkannt hat.

Der Erfindung liegt das technische Problem zugrunde, eine derartige Einbaugarnitur zu schaffen, bei welcher das Eindringen von Wasser, Schmutz usw. zuverlässig verhindert wird.

Zur Lösung dieser Aufgabe schlägt die Erfindung bei einer gattungsgemäßen Einbaugarnitur vor, dass der Schutzrohrflansch und der Axiallagereinsatz zur gegenseitigen Abdichtung beidseitig eines zwischen ihnen befindlichen Spaltes jeweils eine außenumfangseitige Aussparung unter zusammengesetzter Bildung einer Einlegenut für eine spaltabdeckende Umfangsdichtung aufweisen.

Zusätzlich kann nach bevorzugter Ausführungsform der Erfindung zur Betätigungsstangenabdichtung eine auf dem Axiallagereinsatz aufliegende, zumindest die Betätigungsstange umschließende, Runddichtung vorgesehen sein, welche von einer kopfseitigen Abdeckkappe für die Betätigungsstange gegen den Lagereinsatz verspannt wird. Bei dem Schutzrohrflansch handelt es sich üblicherweise - ebenso wie bei dem Schutzrohr und dem Axiallagereinsatz - um jeweils ein rotationssymmetrisches Kunststoffteil, insbesondere Kunststoffspritzgussteil. Aus diesem Grund sieht die Erfindung vorzugsweise weiter vor, dass der Schutzrohrflansch über eine Schweißverbindung, insbesondere Reibschweißverbindung, an das Schutzrohr angeschlossen ist.

Der Schutzrohrflansch kann im Querschnitt einen an den Innendurchmesser des Schutzrohres angepassten Rücksprung als Anschlag für das in den Schutzrohrflansch eingeschobene Schutzrohr aufweisen, damit Schutzrohr und Schutzrohrflansch im Zuge der Reibverschweißung axial gegeneinander festgelegt sind. Im Allgemeinen weist der Schutzrohrflansch einen in Gebrauchsstellung frontseitigen Aufsatz, insbesondere Ringaufsatz, auf, welcher von einem zugehörigen Steg, vorzugsweise Ringsteg, am Axiallagereinsatz unter Bildung eines (Ring-)Gleitlagers übergriffen wird.

Selbstverständlich sind im Rahmen der Erfindung nicht nur rotationssymmetrische, gleichsam ringförmige Ausgestaltungen von Schutzrohrflansch und Axiallagereinsatz denkbar, sondern es können auch Vieleckformen verwirklicht sein, was jedoch unüblich ist. Damit der Axiallagereinsatz Drehbewegungen der Betätigungsstange einwandfrei folgen kann, besitzt dieser eine angeformte Stangenaufnahme für die Betätigungsstange. Im Einzelnen ist ein die Stangenaufnahme und die Betätigungsstange durchgreifender Bolzen vorgesehen, welcher im Zuge einer Niet- oder Schraubverbindung mit der Stangenaufnahme und damit dem Axiallagerreinsatz verbunden wird.

Um eine axial einwandfreie Ausrichtung und Halterung von Schutzrohrflansch und Axiallagereinsatz zu gewährleisten, werden der Schutzrohrflansch und der Axiallagereinsatz im allgemeinen mittels einer Zentrierkappe mit Schnappschlitzen axial gegeneinander verspannt. Diese Zentrierkappe besitzt regelmäßig frontseitige Anschlagstege für den hiergegen anliegenden Axiallagereinsatz. Der Schutzrohrflansch greift hauptsächlich mittels außenumfangsseitiger Rastnasen in die Schnappschlitze ein, so daß die Rastnasen auf dem Grund dieser Schnappschlitze aufliegen bzw. aufstehen und somit die gewünschte Verspannung zwischen Anschlagstegen und Schnappschlitzen bzw. Grund der Schnappschlitze erreicht wird.

Schließlich ist die Umfangsdichtung üblicherweise als im Querschnitt rechteckförmige Flachdichtung mit an die Tiefe der Einlegenut angepaßter Schmalseite und der Breite der Einlegenut entsprechender Breitseite ausgeführt. Auf diese Weise wird zunächst einmal eine einwandfreie Halterung der Umfangsdichtung in der Einlegenut in Axialrichtung erzielt. Ein Verrutschen wird zuverlässig verhindert, so daß der Ringspalt zwischen Schutzrohrflansch und Axiallagereinsatz dauerhaft abgedeckt wird. Durch die Anpassung der Schmalseite bzw. Stärke der Flachdichtung an die Tiefe der Einlegenut wird darüber hinaus erreicht, daß Schutzrohrflansch, Axiallagereinsatz und aufgelegte Flachdichtung als gleichsam kompaktes Aggregat mit durchgängig einheitlicher Mantelfläche in die Zentrierkappe eingesetzt und hierin verrastet werden können.

Insgesamt ermöglicht die beschriebene Einbaugarnitur eine einwandfreie Betätigung auch nach gegebenenfalls langen Phasen einer Nichtbenutzung. Dies läßt sich größtenteils darauf zurückführen, daß Wasser, Schmutz oder dergleichen Verunreinigungen von der Betätigungsstange und damit der Gas- und/oder Wasserarmatur ferngehalten werden. Dies gelingt bereits dann, wenn die Abdeckung einen Schutzrohrflansch sowie einen hierin drehbar gelagerten Axiallagereinsatz zur Aufnahme der Betätigungsstange aufweist. Noch besser wird dieses Ziel erreicht, wenn der Schutzrohrflansch und der Axiallagereinsatz mittels der spaltabdeckenden Umfangsdichtung gegeneinander abgedichtet sind. Jedenfalls wird eine insgesamt zuverlässige Bedienung über Jahre gewährleistet.

Im folgenden wird die Erfindung anhand einer lediglich ein Ausführungsbeispiel darstellenden Zeichnung näher erläutert; es zeigen:

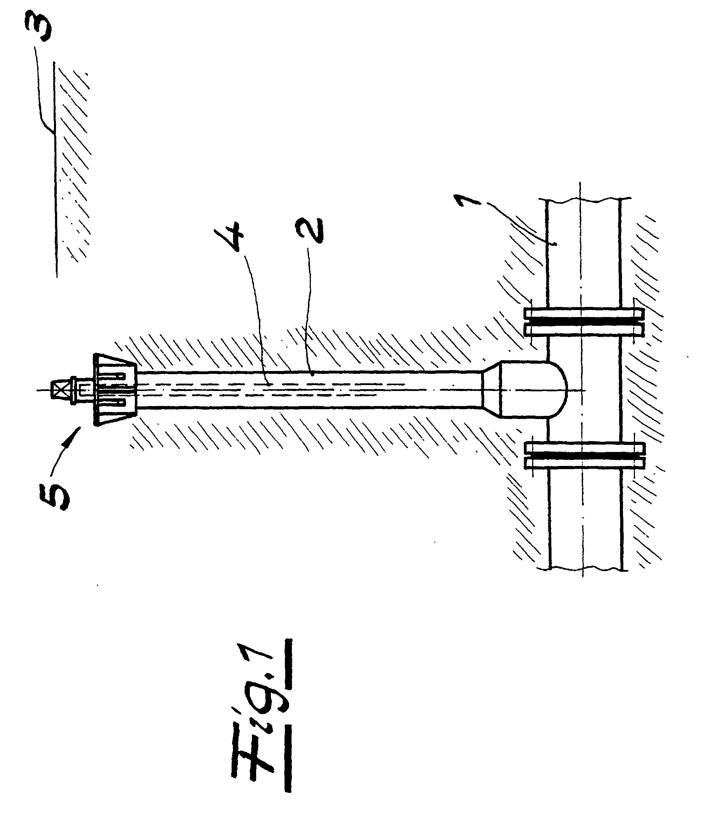

- Fig. 1: einen Schnitt durch eine erfindungsgemäße Einbaugarnitur,
- Fig. 2: einen vergrößerten Ausschnitt aus Fig. 1,

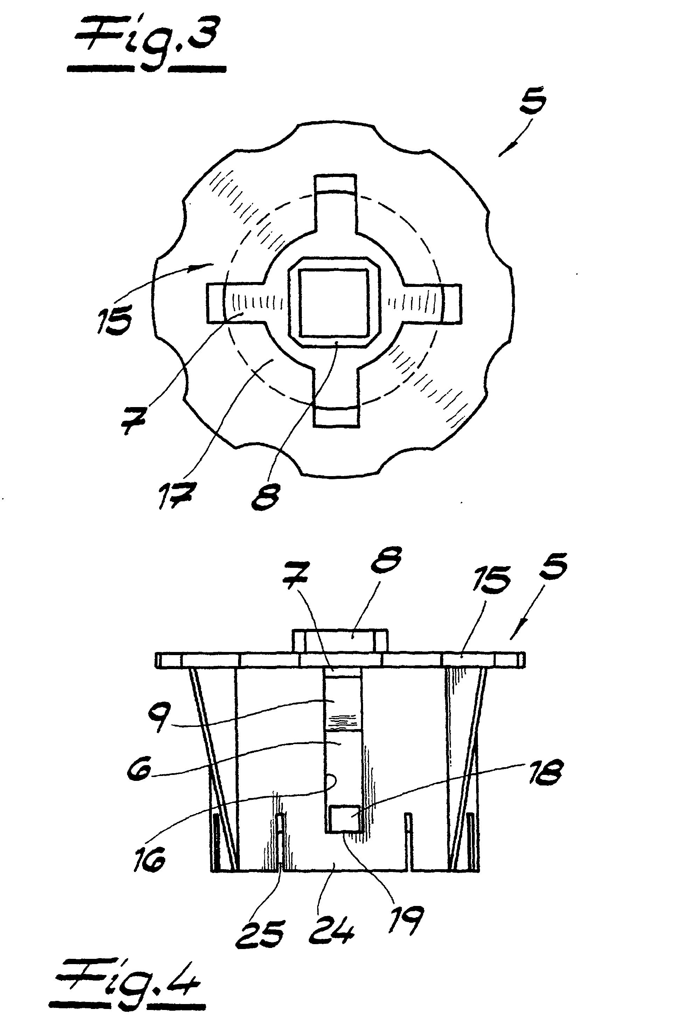

- Fig. 3: eine Aufsicht auf den Gegenstand nach Fig. 1 und
- Fig. 4: eine Seitenansicht des Gegenstandes nach Fig. 1.

In den Figuren ist eine Einbaugarnitur für unterirdisch verlegte Gas- und/oder Wasserarmaturen 1 gezeigt. Diese weist in ihrem grundsätzlichen Aufbau ein Schutzrohr 2 aus Kunststoff, insbesondere Polyethylen (PE), sowie eine in dem Schutzrohr 2 zur Erdoberfläche 3 geführte Betätigungsstange 4 auf. Die vorgenannte Betätigungsstange 4 ist metallisch ausgebildet und als Vierkantvollmaterial ausgeführt. Selbstverständlich kann es sich auch um ein im Querschnitt rechteckiges, insbesondere quadratisches, Stahlrohr handeln.

Die Betätigungsstange 4 ist armaturseitig an die Gas- und/oder Wasserarmatur 1 angeschlossen, um hierin angeordnete Schieber, Ventile oder dergleichen zu betätigen. Darüber hinaus findet sich eine erdoberflächenseitige Abdeckung 5 für das Schutzrohr 2. Durch diese Abdeckung 5 ist die Betätigungsstange 4 hindurchgeführt. Die Abdeckung 5 umfaßt einen Schutzrohrflansch 6 sowie einen hierin drehbar gelagerten Axiallagereinsatz 7. Dieser Axiallagereinsatz 7 dient zur Aufnahme der Betätigungsstange 4 und weist hierzu eine angeformte Stangenaufnahme 8 für die Betätigungsstange 4 auf. Stangenaufnahme 8 und Axiallagereinsatz 7 sind als einstückiges Kunststoffspritzgußteil vorzugsweise aus PE ausgeführt. Dies gilt auch für den Schutzrohrflansch 6.

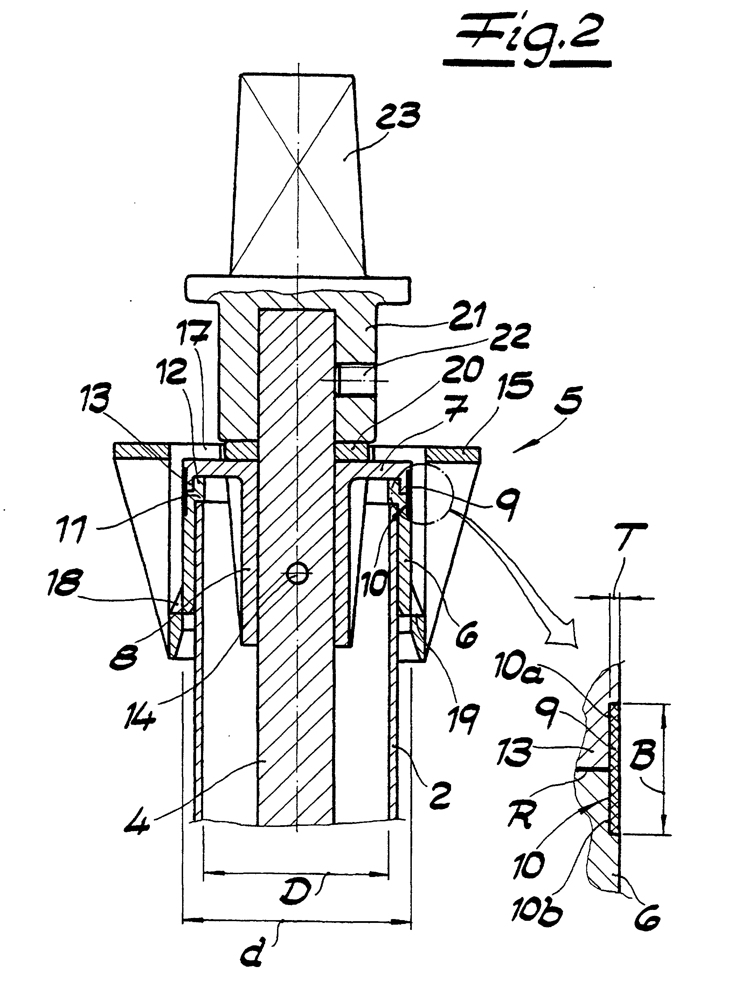

Der Schutzrohrflansch 6 und der Axiallagereinsatz 7 sind zur Schutzrohrversiegelung mittels einer spaltabdeckenden Umfangsdichtung 9 gegeneinander abgedichtet. Diese Umfangsdichtung 9 deckt folglich den zwischen Schutzrohrflansch 6 und Axiallagereinsatz 7 unvermeidlichen Ringspalt R ab (vgl. insbesondere den vergrößerten Ausschnitt in Fig. 2). Zu diesem Zweck ist die Umfangsdichtung 9 als im Querschnitt rechteckförmige Flachdichtung mit an die Tiefe T einer Einlegenut 10 angepaßten Schmalseite und der Breite B der Einlegenut 10 entsprechender Breitseite ausgeführt. Zur Bildung der vorgenannten Einlegenut bzw. Einlegeringnut 10 besitzen sowohl der Schutzrohrflansch 6 als auch der Axiallagereinsatz 7 beidseitig des zwischen Ihnen befindlichen Spaltes bzw. Ringspaltes R jeweils eine außenumfangsseitige Aussparung, insbesondere Ringaussparung 10a, 10b. Beide Aussparungen, insbesondere Ringaussparungen 10a, 10b formen zusammengesetzt die vorgenannte Einlegeringnut 10 für die Umfangsdichtung 9.

Der Schutzrohrflansch 6 ist über eine Schweißverbindung, insbesondere Reibschweißverbindung, an das Schutzrohr 2 angeschlossen. Selbstverständlich ist an dieser Stelle auch eine Ultraschallschweißverbindung denkbar. Auch Klebeverbindungen können prinzipiell verwirklicht sein. Damit der Schutzrohrflansch 6 gegenüber dem Schutzrohr 2 im Zuge der Verschweißung einwandfrei ausgerichtet ist, besitzt der Schutzrohrflansch 6 im Querschnitt einen an den Innendurchmesser D des Schutzrohres 2 angepaßten Rücksprung 11. Dieser Rücksprung 11 dient als Anschlag für das in den Schutzrohrflansch 6 im Zuge der Montage eingeschobene Schutzrohr 2. Nachdem Schutzrohr 2 und Schutzrohrflansch 6 auf diese Weise gegeneinander ausgerichtet wurden, kann die angesprochene Schweißverbindung zwischen beiden vorgenannten Teilen 6, 2 vorgenommen werden.

Darüber hinaus weist der Schutzrohrflansch 6 einen frontseitigen Aufsatz, insbesondere Ringaufsatz, 12 auf. Dieser Ringaufsatz 12 schließt sich unmittelbar an den Rücksprung 11 an bzw. steht auf diesem senkrecht auf. Der vorgenannte Ringaufsatz 12 wird von einem zugehörigen Ringsteg 13 am Axiallagereinsatz 7 unter Bildung eines Ringgleitlagers 12, 13 übergriffen. Selbstverständlich sind auch andere - nicht ringförmige - Gestaltungen, beispielsweise Mehreckausführungen, denkbar.

Jedenfalls bilden Ringaufsatz 12 sowie zugehöriger Ringsteg 13 das vorgenannte Ringgleitlager 12, 13, dessen zugehöriger Ringspalt R von der Umfangsdichtung 9 überdeckt bzw. abgedichtet wird. Zusätzliche Schmiermaßnahmen sind mit Blick auf das vorgenannte Ringgleitlager 12, 13 nicht erforderlich, weil zwei PE-Kunststoffteile 12, 13 mit relativ geringer Reibzahl aufeinander gleiten. Anhand der Figur 2 erkennt man, daß bei in der Einlegenut 10 befindlicher Umfangsdichtung 9 ein Aggregat aus Schutzrohrflansch 6, Axiallagereinsatz 7 und vorgenannter Umfangsdichtung 9 mit durchgängiger Mantelfläche gleichbleibenden Durchmessers d gebildet wird.

Zur Befestigung der Betätigungsstange 4 an der an den Axiallagereinsatz 6 angeformten Stangenaufnahme 8 dient ein Bolzen 14, welcher durch die Stangenaufnahme 8 und die Betätigungsstange 4 hindurchgeführt ist. Dieser Bolzen 14 kann vernietet oder verschraubt werden. Zusätzlich findet sich eine Zentrierkappe 15 mit Schnappschlitzen 16 (vgl. insbesondere Fig. 4) zur Aufnahme des vorerwähnten Aggregates 6, 7, 9 mit Außendurchmesser d. Der Schutzrohrflansch 6 sowie der Axiallagereinsatz 7 lassen sich mit der vorgenannten Zentrierkappe 15 axial gegeneinander verspannen. Zu diesem Zweck weist die Zentrierkappe 15 frontseitige Anschlagstege 17 für den hiergegen anliegenden Axiallagereinsatz 7 auf. Ferner besitzt der Schutzrohrflansch 6 außenumfangsseitige Rastnasen 18, die in die vorgenannten Schnappschlitze 16 eingreifen. Dies geschieht, sobald das Aggregat aus Axiallagereinsatz 7, Schutzrohrflansch 6 und Umfangsdichtung 9 in die vorgenannte Zentrierkappe 15 vollständig eingeschoben wurde. Denn sobald die Rastnasen 18 einen Schlitzgrund 19 der Schnappschlitze 16 überfahren, spreizen die Rastnasen 18 auf bzw. schnappt die Zentrierkappe 15 im Bereich der Schnappschlitze 16 zurück. Gleichzeitig werden Schutzrohrflansch 6 und Axiallagereinsatz 7 gegeneinander fixiert, nämlich zwischen Schlitzgrund 19 und Anschlagstegen 17.

Schließlich ist zur Betätigungsstangenabdichtung eine auf dem Axiallagereinsatz 7 aufliegende Runddichtung 20 vorgesehen. Diese Runddichtung 20 umschließt zumindest die Betätigungsstange 4 sowie ggf. die Stangenaufnahme 8. Um eine zuverlässige Abdichtung zu erreichen, wird die vorgenannte Runddichtung 20 mittels einer kopfseitigen Abdeckkappe 21 für die Betätigungsstange 4 gegen den Axiallagereinsatz 7 verspannt.

Die vorgenannte Runddichtung 20 ist aus EPDM (Ethylen-Propylen-Kautschuk) gefertigt. Dies gilt auch für die Umfangsdichtung 9. Bei der kopfseitigen Abdeckkappe 21 für die Betätigungsstange 4 handelt es sich nach dem Ausführungsbeispiel um ein Grauguß- bzw. Tempergußteil, welches mittels einer Schraube 22 an der vorgenannten Betätigungsstange 4 befestigt wird. Kopfseitig dieser Abdeckkappe 21 ist ein Mehrkantzapfen 23 für einen anzusetzenden Bedienungsschlüssel vorgesehen. Zentrierkappe 15, Schutzrohrflansch 6, Axiallagereinsatz 7 und Schutzrohr 2 sind sämtlich aus Kunststoff, insbesondere PE, gefertigt.

Zur einfachen Verrastung des Aggregates aus Axiallagereinsatz 7, Schutzrohrflansch 6 und Umfangsdichtung 9 in der Zentrierkappe 15 weist letztere schließlich nach außen spreizbare Federzungen 24 auf. Zwischen diesen Federzungen 24 sind Zentrierschlitze 25 vorgesehen, in welche der Schutzrohrflansch 6 mit nicht ausdrücklich bezeichneten Zentrierstegen eingreift (vgl. Fig. 4).

## Patentansprüche

1. Einbaugarnitur für insbesondere unterirdisch verlegte Gas- und/oder Wasserarmaturen (1), mit einer in einem Schutzrohr (2) in Gebrauchsstellung zur Erdoberfläche (3) geführten Betätigungsstange (4), die armaturseitig an die Gas- und/oder Wasserarmatur (1) anschließbar ist, und mit einer in Gebrauchsstellung erdoberflächenseitigen Abdeckung (5) für das Schutzrohr (2) und die hierdurch geführte Betätigungsstange (4), wobei die Abdeckung (5) einen Schutzrohrflansch (6) sowie einen hierin drehbar gelagerten Axiallagereinsatz (7) zur Aufnahme der Betätigungsstange (4) aufweist und wobei der Schutzrohrflansch (6) und der Axiallagereinsatz (7) mittels einer spaltabdeckenden Umfangsdichtung (9) gegeneinander abgedichtet sind, **dadurch gekennzeichnet, dass**
der Schutzrohrflansch (6) und der Axiallagereinsatz (7) beidseitig eines zwischen ihnen befindlichen Spaltes (R) jeweils eine außenumfangseitige Aussparung (10a, 10b) unter zusammengesetzter Bildung einer Einlegenut (10) für die spaltabdeckende Umfangsdichtung (9) aufweisen.

2. Einbaugarnitur nach Anspruch 1, **dadurch gekennzeichnet, dass** der Schutzrohrflansch (6) im Querschnitt einen an den Innendurchmesser (D) des Schutzrohres (2) angepassten Rücksprung (11) als Anschlag für das in den Schutzrohflansch (6) eingeschobene Schutzrohr (2) aufweist.

3. Einbaugarnitur nach Anspruch 1 oder 2, **dadurch gekennzeichnet, dass** der Schutzrohrflansch (6) einen in Gebrauchsstellung frontseitigen Aufsatz (12) aufweist, welcher von einem zugehörigen Steg (13) am Axiallagereinsatz (7) unter Bildung eines Gleitlagers übergriffen wird.

4. Einbaugarnitur nach einem der Ansprüche 1 bis 3, **dadurch gekennzeichnet, dass** der Schutzrohrflansch (6) und der Axiallagereinsatz (7) mittels einer Zentrierkappe (15) mit Schnappschlitzen (16) axial gegeneinander verspannt sind.

5. Einbaugarnitur nach einem der Ansprüche 1 bis 4, **dadurch gekennzeichnet, dass** der Axiallagereinsatz (7) eine angeformte Stangenaufnahme (8) für die Betätigungsstange (4) aufweist.

6. Einbaugarnitur nach Anspruch 4 oder Anspruch 5 mit Rückbezug auf Anspruch 4, **dadurch gekennzeichnet, dass** der Schutzrohrflansch (6) mittels außenumfangsseitiger Rastnasen (18) in die Schnappschlitze (16) eingreift.

7. Einbaugarnitur nach einem der Ansprüche 1 bis 6, **dadurch gekennzeichnet, dass** die Umfangsdichtung (9) als im Querschnitt rechteckförmige Flachdichtung mit an die Tiefe (T) der Einlegenut (10) angepasster Schmalseite und der Breite (B) der Einlegenut (10) entsprechender Breitseite ausgeführt ist.

8. Einbaugarnitur nach einem der Ansprüche 1 bis 7, **dadurch gekennzeichnet, dass** zur Betätigungsstangenabdichtung eine auf dem Axiallagereinsatz (7) aufliegende, zumindest die Betätigungsstange (4) umschließende, Runddichtung (20) vorgesehen ist, welche von einer kopfseitigen Abdeckkappe (21) für die Betätigungsstange (4) gegen den Axiallagereinsatz (7) verspannt ist.

## Claims

1. A installation kit especially for underground gas and/or water fittings (1), with an actuating rod (4) inserted in a protective conduit (2) in the position for use at the surface of the Earth, which can be connected to the gas and/or water fittings (1) at the fittings side, and with a cover (5) for the protective conduit (2) and the actuating rod fed (4) herethrough in the position for use at the surface of the Earth, wherein the cover (5) has a protective-conduit flange (6) and a thrust bearing insert (7) pivotable herein to accommodate the actuating rod (4), wherein the protective conduit flange (6) and the thrust bearing insert (7) are sealed relative to each other by means of a circumferential seal (9) covering the gap, **characterised in that** the protective-conduit flange (6) and the thrust bearing insert (7) on both sides of a gap (R) located between them each have a recess (10a, 10b) on the side of the outer circumference, which combine to form an insertion groove (10) for the circumferential seal (9) covering the gap.

2. A installation kit according to claim 1, **characterised in that** in the cross-section the protective-conduit flange (6) has a recess (11) matched to the inner diameter (D) of the protective conduit (2) as a stop for the protective conduit (2) inserted in the protective-conduit flange (6).

3. A installation kit according to claim 1 or 2, **characterised in that** the protective-conduit flange (6) has a fixture (12) on the front side in the position for use, which is overlapped by a suitable cross-piece (13) at the thrust bearing insert (7) to form a sliding bearing.

4. A installation kit according to one of claims 1 to 3, **characterised in that** the protective-conduit flange (6) and the thrust bearing insert (7) are clamped axially relative to one another by means of a centring cap (15) with snap-in slots (16).

5. A installation kit according to one of claims 1 to 4, **characterised in that** the thrust bearing insert (7) has a moulded rod holder (8) *[illegible]* for the actuating rod (4).

6. A installation kit according to claim 4 *[illegible]* or claim 5 with reference back to claim 4, **characterised in that** the protective-conduit flange (6) engages in the snap-in slot (16) by means of latches (18) on the side of the outer circumference.

7. A installation kit according to one of claims 1 to 6, **characterised in that** the circumferential seal (9) is designed as a rectangular flat seal in cross-section with the narrow side matched to the depth (T) of the insertion groove (10) and the broad side corresponding to the width (B) of the insertion groove (10).

8. A installation kit according to one of claims 1 to 7, **characterised in that** for sealing the actuating rod there is provided a round seal (20) located on the thrust bearing insert (7), at least surrounding the actuating rod (4), which is braced against the thrust bearing insert (7) by a sealing cap (21) for the actuating rod (4) on the head side.

## Revendications

1. Garniture intégrée pour en particulier des robinets de gaz et/ou d'eau (1) installés en sous-sol, avec une barre d'actionnement (4) guidée en position d'utilisation dans un tuyau protecteur (2) jusqu'à la surface du sol (3), qui est connectable du côté du robinet au robinet de gaz et/ou d'eau (1), et avec un couvercle (5) au niveau de la surface du sol en position d'utilisation pour le tuyau protecteur (2) et la barre d'actionnement (4) le traversant, le couvercle (5) présentant une bride (6) pour le tuyau protecteur ainsi qu'un insert à palier axial (7) installé de manière à pouvoir pivoter destiné à recevoir la barre d'actionnement (4) et la bride (6) du tuyau protecteur et l'insert à palier axial (7) étant rendus étanches l'un par rapport à l'autre au moyen d'un joint de volume (9) recouvrant l'intervalle, **caractérisée en ce que**
la bride (6) pour le tuyau protecteur et l'insert à palier axial (7) présentent respectivement, des deux côtés d'un intervalle (R) se trouvant entre eux, un évidement (10a, 10b) situé sur le volume extérieur en formant conjointement une rainure de dépôt (10) pour le joint de volume (9) recouvrant l'intervalle.

2. Garniture intégrée selon la revendication 1, **caractérisée en ce que** la bride (6) du tuyau protecteur présente, en section transversale une proéminence (11) adaptée au diamètre intérieur (D) du tuyau protecteur (2) servant de butée pour le tuyau protecteur (2) inséré dans la bride (6) pour le tuyau protecteur.

3. Garniture intégrée selon la revendication 1 ou 2, **caractérisée en ce que** la bride (6) du tuyau protecteur présente une pièce frontale ajoutée (12) qui est enjambée par une traverse (13) en faisant partie sur l'insert à palier axial (7), en formant un palier de glissement.

4. Garniture intégrée selon une des revendications 1 à 3, **caractérisée en ce que** la bride du tuyau protecteur (6) et l'insert à palier axial (7) sont serrés l'un contre l'autre au moyen d'un capuchon de centrage (15) à fentes d'emboîtement (16).

5. Garniture intégrée selon une des revendications 1 à 4, **caractérisée en ce que** l'insert à palier axial (7) présente un support de barre (8) formé pour la barre d'actionnement (4).

6. Garniture intégrée selon la revendication 4 ou la revendication 5 en référence à la revendication 4, **caractérisée en ce que** la bride (6) du tuyau protecteur s'engrène dans la fente d'emboîtement (16) au moyen de rebords d'enclenchement (18) situés sur le volume extérieur.

7. Garniture intégrée selon une des revendications 1 à 6, **caractérisée en ce que** le joint de volume (9) est conçu comme un joint plat de section transversale rectangulaire avec un côté étroit adapté à la profondeur (T) de la rainure de dépôt (10) et un côté large correspondant à la largeur (B) de la rainure de dépôt (10).

8. Garniture intégrée selon une des revendications 1 à 7, **caractérisée en ce que**, pour rendre la barre d'actionnement étanche, un joint circulaire (20) reposant sur l'insert à palier axial (7), entourant au moins la barre d'actionnement (4), qui est serré devant un capuchon de recouvrement (21) de la barre d'actionnement (4) situé du côté de la tête contre l'insert à palier axial (7), est prévu.
